# EUROPÄISCHE PATENTANMELDUNG

(11) **EP 4 588 659 A1**
(43) Veröffentlichungstag der Anmeldung: **23.07.2025**
(21) Anmeldenummer: 24152881.9
(22) Anmeldetag: 19.01.2024
(51) Int. Cl.: B32B 27/08, B32B 7/02, B32B 7/06, B32B 7/12, B32B 27/10, B32B 27/30, B32B 27/32

(54) **MEHRSCHICHTIGE MEMBRAN FÜR LEBENSMITTELVERPACKUNGEN**

(71) Anmelder: Tchibo GmbH, 22297 Hamburg (DE)
(72) Erfinder: DÖHMEN, Ben, 20144 Hamburg (DE)
(74) Vertreter: Frei Patent Attorneys

(57) **Zusammenfassung**

Die Erfindung betrifft einen Mehrschicht-Verbund umfassend zumindest zwei Deckschichten aus Polyethen und eine haftvermittelnde Schicht enthaltend PVOH zur Verwendung als Verpackungsmaterial für Lebensmittel und insbesondere für Kaffee.

## Beschreibung

Die Erfindung betrifft einen Mehrschicht-Verbund umfassend zumindest zwei Deckschichten aus einem Polyoleofin und eine haftvermittelnde Schicht enthaltend Polyvinylalkohol zur Verwendung als Verpackungsmaterial für Lebensmittel und insbesondere für Kaffee.

Polyethylen (kurz PE) ist ein Polyolefin und wird in erster Linie für Verpackungen verwendet. Polyethylen zeichnet sich durch hohe chemische Beständigkeit aus und ist von niedriger Festigkeit, Härte und Steifigkeit, besitzt aber eine hohe Dehnbarkeit.

Polyethylen besitzt eine hohe Beständigkeit gegen Säuren, Laugen und weitere Chemikalien. Es nimmt zudem kaum Wasser auf. Die Gas- und Wasserdampfdurchlässigkeit (nur polare Gase) ist niedriger als bei den meisten Kunststoffen; Sauerstoff, Kohlendioxid und Aromastoffe lässt es hingegen gut durch. Daher ist PE alleine als Verpackung für Lebensmittel und insbesondere für Kaffee nicht geeignet. Verpackungen bestehen daher häufig aus mehrschichtigen Folien oder Membranen, wobei verschiedene Schichten aus unterschiedlichen Materialien in Kombination die optimalen Eigenschaften erreicht werden.

Polypropylen (PP) ist ebenfalls ein häufig verwendetes Polyolefine. Seine Eigenschaften ähneln Polyethylen, er ist jedoch etwas härter und wärmebeständiger. Polypropylen wird ebenfalls, auch im Verbund mit PE, häufig als Verpackungsmaterial verwendet.

Verpackungen und insbesondere Pouches für Kaffee bestehend momentan häufig aus mehrschichtigen Folien deren Barriereeigenschaften, also die Undurchlässigkeit von Wasser, Wasserdampf und Aromastoffen durch eine Mischung aus PE und anderen Polymeren bestehen. Die einzelnen Schichten halten dabei durch haftvermittelnde Schichten bzw. Kleber zusammen. Ein gängiger Aufbau ist zum Beispiel eine mehrschichtige Folie aus PE-Deckschichten, einer Gasbarriere bildende Schicht aus EVOH und haftvermittelnde Schichten aus Polyurethan.

Ein häufiges Ziel von Verpackungs- und Lebensmittelherstellern sowie dem Gesetzgeber sind die kontinuierliche Verbesserung der Umweltverträglichkeit von Verpackungen.

Die Reduzierung von Verpackungsmüll kann zum einen durch die Einsparung von Material aber auch durch die qualitativ bessere Recyclierbarkeit der einzelnen Bestandteile erreicht werden. Dafür ist es wichtig, dass sich die einzelnen Materialien möglichst rein voneinander trennen lassen.

Die Aufgabe der Erfindung ist es eine haftvermittelnde Schicht für Polyoleofin-Folien bereitzustellen, die mindestens einen der Nachteile von bisherigen mehrschichtigen PE-Verpackungen verbessert und zugleich die vorteilhaften Eigenschaften erhält.

Mindestens einen dieser Aspekte der Aufgabe löst eine mehrschichtige Membran, die mindestens zwei Deckschichten aus einem Polyoleofin und eine haftvermittelnde Schicht mit Polyvinylalkohol umfasst oder aus diesen besteht.

Die Polyolefine können ausgewählt werden aus der Gruppe umfassend oder bestehend aus: Polyethylen (PE), Polypropylen (PP), Polymethylpenten (PMP), Polyisobutylen (PIB) und Polybutylen (PB). Bevorzugt sind Polyethylen (PE), Polypropylen (PP).

Jede der beiden Deckschichten kann aus einem oder mehreren Polyoleofinen bestehen. Es ist jedoch bevorzugt, wenn die Deckschichten nur ein Polyoleofin enthalten. Beide Deckschichten können aus unterschiedlichen Polyoleofinen bestehen, es ist jedoch vorteilhaft, wenn beide Deckschichten aus dem gleichen Polyoleofin bestehen. Dies führt dazu, dass nach dem Auswaschen des PVOH nur ein Polymer im Recyclingprozess verbleibt und ein sortenreines Recyclat hergestellt werden kann.

Es können in den Deckschichten Additive vorhanden sein, die dem Polyoleofin zusätzliche positive Eigenschaften verleihen. Bevorzugt ist aber, wenn die Deckschicht zumindest zu 98 Gew.% aus reinem Polyoleofin und noch weiter bevorzugt zu 100 % aus einem reinem Polyoleofin besteht. Wenn die Deckschicht oder beide Deckschichten aus PE bestehen, handelt es sich bevorzugt nur um einen Polyethylen-Typen wie High-Density-Polyethylen (PE-HD), Linear-Low-Density-Polyethylen (PE-LLD) und Low-Density-Polyethylen (PE-LD).

Das PVOH kann hierbei zwei Funktionen erfüllen. Es dient als Klebstoff bzw. Haftvermittler und bildet eine Gasbarriere. Dies verringert den Bedarf an eingesetztem Haftvermittler bzw. Barrierematerial und erhöht die Reinheit der wiedergewonnenen Rohstoffe bei einem Recycling. In einer Ausführungsform ist die PVOH-Schicht jedoch so ausgeformt, z.B. so dünn, dass sie keine wesentliche Gas-Barrierefunktion ausüben kann. Die durch die PVOH-Zwischenschicht zusätzlich erreichte Sauerstoffbarriere kann selbst bei einer geringen relativen Feuchte (60%) und 20°C mehr als 20 cm³·m⁻²·Tag⁻¹·atm⁻ oder bevorzugt mehr als 50 cm³·m⁻²·Tag⁻¹·atm⁻ oder weiter bevorzugt mehr als 100 cm³·m⁻²·Tag⁻¹·atm⁻liegen.

Polyvinylalkohol (PVOH) ist häufig verwendetes Biopolymer. PVOH ist ein wasserlöslicher und in wässriger Umgebung biologisch abbaubarer Kunststoff. PVOH zeichnet sich durch eine hohe Reißfestigkeit und Elastizität aus. Diese Eigenschaften sind abhängig von der Luftfeuchtigkeit, da der Kunststoff Wasser absorbiert. Als thermoplastischer Kunststoff lassen sich einige PVOH-Typen grundsätzlich mit den gängigen Kunststoffverarbeitungsverfahren und die wasserlöslichen Typen als Lösung in Wasser verarbeiten. Bei geeigneter Rohstoffauswahl inkl. Additivierung (v. a. Zugabe von Weichmachern) eignet es sich sowohl für die Folienextrusion, das Thermoformen, den Spritzguss als auch das Blasformen. Es ist bevorzugt, wenn man mit dem PVOH der vorliegenden Erfindung bei 20 °C eine mindestens 4% Lösung in Wasser herstellen kann.

Die erfindungsgemäße mehrschichtige Membran oder die erfindungsgemäße Folie sind besonders geeignet zur Herstellung einer Lebensmittelverpackung und insbesondere eines Beutels mit Kaffee für ein Getränkezubereitungssystem.

Es hat sich gezeigt, dass durch eine verbesserte Sauerstoffbarriere der Kaffee länger frisch bleibt. Dafür ist es wichtig, dass die Schicht aus PVOH auf beiden Seiten von einer Deckschicht aus Polyoleofin umgeben ist, die Wasser und Wasserdampf abhält. Die Deckschichten aus Polyoleofin, wie PE oder PP überlagern somit die PVOH-Schicht (Zwischenschicht) und werden ihrerseits vom PVOH zusammengehalten. Die Schichtung kann also z.B. folgendermassen aussehen PE-PVOH-PE, PE-PVOH-PP oder PP-PVOH-PP. Dabei können weitere Schichten einer Verpackung, wie Papier oder weitere Barriereschichten mit der erfindungsgemässen Membran zusammen die Verpackung bilden.

In einer Ausführungsform weist die mehrschichtige Membran eine Wasserdampf- und/oder Feuchtigkeitsbarriere von maximal 15 g/m² pro Tag bei 25°C und einer relativen Luftfeuchtigkeit von 80%, insbesondere maximal 10 g/m² pro Tag bei 25°C und einer relativen Luftfeuchtigkeit von 80%, insbesondere 3 g/m² pro Tag bei 25°C und einer relativen Luftfeuchtigkeit von 80%, insbesondere 2 g/m² pro Tag bei 25°C und einer relativen Luftfeuchtigkeit von 80%, auf.

Die erfindungsgemässe Membran alleine oder mit weiteren Schichten, wie Papier oder Polymerschichten, sind somit besonders für die Herstellung von einem Pouch geeignet.

Das Wort "Pouch" stammt aus dem Englischen und heißt übersetzt "Beutel". Bei einem Pouch-Pack handelt es sich um eine flexible Verpackung in Form eines Beutels. Kaffee Pouch Packs sind Portionsbeutel von bestimmter Größe und bestimmtem Gewicht. Der Kaffee kann sich in Filtern befinden, die genau in die entsprechenden Pouch Pack Maschinen passen. Befüllung und Entleerung werden damit erleichtert.

Es ist bevorzugt, wenn die haftvermittelnde Schicht der Membran Sauerstoff- und Gasbarriereeigenschaften vermittelt. Die bedeutet die Diffusion von Sauerstoff und Aromastoffen durch die Membran wird verringert. Diese Eigenschaften werden durch das PVOH vermittelt. Die haftvermittelnde Schicht kann aber auch in geringem Mass noch Additive aufweisen. Dies sind zum Beispiel Weichmacher oder Salze. Es ist aber bevorzugt, wenn mindestens 90 %, noch besser mindestens 92%, 95% oder 98% der haftvermittelten Schicht aus PVOH bestehen. Es kann sich sogar um eine reine PVOH-Schicht handeln.

In einer Ausführungsform kann sich die haftvermittelnde Schicht in Wasser auflösen. Dies ermöglicht die einfache und vollständige Ablösung der beiden Polyoleofin-Schichten von der haftvermittelnden Schicht. Es ist bevorzugt, dass sich die haftvermittelnde Schicht vollständig und rückstandfrei in Wasser auflöst. Die Auflösung der haftvermittelnden Schicht kann bevorzugt bei max. 40°C, bevorzugt sogar unter 35°C oder sogar unter 20°C geschehen.

In gelöster Form kann das PVOH direkt zu neuen Produkten, wie Folien, verarbeitet, zur Wiederverwendung zurückgewonnen werden oder durch die Einwirkung von Mikroorganismen und Bakterien vollständig zu Wasser (H₂O) und Kohlenstoffdioxid (CO₂) abgebaut werden. Im Gegensatz zu nicht abbaubaren Polymeren, egal ob fossil oder biobasiert, erzeugen einmal aufgelöste wasserlösliche PVOH-Granulate und Produkte kein Mikroplastik. Dadurch dass sich das PVOH in einem Waschprozess in der Recyclinganlage auflöst wird das resultierende Polyoleofin-Granulat nicht verunreinigt.

Durch die vollständige Auf- bzw. Ablösung der haftvermittelnden Schicht kann auch das Polyoleofin mit sehr hoher Reinheit von mindestens 95 Gew.%, oder sogar mindestens 98 Gew.%, bevorzugt mindestes 99 Gew. % wiedergewonnen werden.

Die vorliegende Erfindung kann Membranen mit einer haftvermittelnden Schicht aufweisen, die PVOH mit einen Hydrolysegrad von 60 bis 98 %, und bevorzugt von 70 75 bis 95% und weiter bevorzugt von 8075 bis 90% umfassen. Die vorliegende Erfindung kann zudem Membranen umfassen, deren haftvermittelnde Schicht PVOH mit einem Molekulargewicht von 13 000 bis 80 000 aufweist, und bevorzugt von 15 000 bis 60 000 und weiter bevorzugt von 18 000 bis 50 000. Das PVOH kann zudem so gewählt sein, dass es sich bei unter 40°C, bevorzugt unter 35° C und weiter bevorzugt unter 20°C vollständig auflöst.

Die beiden Deckschichten der Membran aus Polyoleofin können jeweils eine Dicke von 1 bis 100 µm und bevorzugt 5 bis 50 µm, weiter bevorzugt 10 bis 35 µm haben. Die haftvermittelnde Schicht kann eine Dicke von 0,2 bis 20 µm und bevorzugt 0,5 bis 15 µm und weiter bevorzugt 0,5 bis 10 µm aufweisen.

Insgesamt kann die Membran zu mindestens zu 90 Gew. %, bevorzugt mindesten 95 Gew. % und noch weiter bevorzugt zu 98 Gew.% aus Polyethylen bestehen.

Ein zweiter Aspekt der Erfindung bezieht sich auf eine Verpackung für Lebensmittel, die die mehrschichtige Membran aufweisen oder aus dieser Membran bestehen. Neben der Membran kann die Verpackung eine Papiergrundschicht oder weitere Barriereschichten aufweisen. Die Papiergrundschicht kann z.B. mit der erfindungsgemässen Membran beschichtet sein.

Die Verpackung für Lebensmittel kann z. B. ein Beutel sein, insbesondere ein Portionsbeutel für Kaffee.

## Patentansprüche

1. Mehrschichtige Membran zur Verwendung als Membran für eine Lebensmittelverpackung, umfassend zumindest:
- zwei Deckschichten aus einem Polyoleofin; und
- eine haftvermittelnde Schicht umfassend PVOH.

2. Die mehrschichtige Membran nach Anspruch 1, wobei die haftvermittelnde Schicht zudem eine Gasbarriere aufweist.

3. Die mehrschichtige Membran nach Anspruch 1 oder 2, wobei die beiden Deckschichten eine Dicke von 1 bis 50 µm hat.

4. Die mehrschichtige Membran nach einem der Ansprüche 1 bis 3, wobei die Membran mindestens zu 95% aus Polyoleofin besteht.

5. Die mehrschichtige Membran nach einem der Ansprüche 1 bis 4, wobei die Membran mindestens zu 95% aus Polyoleofin besteht.

6. Die mehrschichtige Membran nach einem der vorhergehenden Ansprüche, wobei die beiden Deckschichten aus dem gleichen Polyoleofin bestehen.

7. Die mehrschichtige Membran nach einem der vorhergehenden Ansprüche, wobei die Membran eine Wasserdampf- und/oder Feuchtigkeitsbarriere von maximal 15 g/m² pro Tag bei 25°C und einer relativen Luftfeuchtigkeit von 80%, insbesondere maximal 10 g/m² pro Tag bei 25°C und einer relativen Luftfeuchtigkeit von 80%, insbesondere 3 g/m² pro Tag bei 25°C und einer relativen Luftfeuchtigkeit von 80%, insbesondere 2 g/m² pro Tag bei 25°C und einer relativen Luftfeuchtigkeit von 80%, aufweist.

8. Die mehrschichtige Membran nah einem der vorhergehenden Ansprüche, wobei die haftvermittelnde Schicht aus PVOH besteht.

9. Die mehrschichtige Membran nah einem der vorhergehenden Ansprüche, wobei das PVOH sich rückstandfrei in Wasser auflöst.

10. Verpackung für Lebensmittel, die die mehrschichtige Membran nach einem der vorhergehenden Ansprüche aufweist.

11. Verpackung für Lebensmittel nach Anspruch 10, wobei die Verpackung neben der mehrschichtigen Membran eine Papiergrundschicht aufweist.

12. Verpackung für Lebensmittel nach Anspruch 10, wobei die Verpackung aus der mehrschichtigen Membran nach einem der Ansprüche 1 bis 7 besteht.

13. Verpackung für Lebensmittel nach einem der Ansprüche 10 bis 12, wobei die Verpackung ein Beutel ist.

14. Verpackung für Lebensmittel nach Anspruch 13, wobei die Verpackung ein Portionsbeutel für Kaffee ist.
